# EUROPÄISCHE PATENTANMELDUNG

(11) **EP 1 925 541 A1**
(43) Veröffentlichungstag der Anmeldung: **28.05.2008**
(21) Anmeldenummer: 07022383.9
(22) Anmeldetag: 19.11.2007
(51) Int. Cl.: B62H 5/00

(54) **Fahrzeug mit Sicherungseinrichtung**

(30) Priorität: 21.11.2006 DE 102006055105
(71) Anmelder: Masterflex AG, 45699 Herten (DE)
(72) Erfinder: Müller, Willfried, 46147 Oberhausen (DE)
(74) Vertreter: Gesthuysen, von Rohr & Eggert

(57) **Zusammenfassung**

Bei einem Fahrzeug (1) mit einem Pedalantrieb (2) und/oder einem elektrischen Antrieb (3) wird eine Sicherungseinrichtung (4) vorgeschlagen, die über eine mechanische Sicherung des Fahrzeugs (1) an einer ortsfesten Einrichtung (5) hinaus auch eine elektrische Verbindung zwischen dem Fahrzeug (1) und der ortsfesten Einrichtung (5) im Sicherungszustand herstellt. Dies gestattet eine zusätzliche Funktionalität, insbesondere zum Datenaustausch und/oder zum Aufladen eines Energiespeichers des Fahrzeugs.

## Beschreibung

Die vorliegende Erfindung betrifft ein Fahrzeug, insbesondere ein Fahrrad, mit einem Pedalantrieb und/oder einem elektrischen Antrieb und mit einer zugeordneten Sicherungseinrichtung zur mechanischen Sicherung des Fahrzeugs an einer ortsfesten Einrichtung in einem Sicherungszustand. Weiter betrifft die vorliegende Erfindung eine ortsfeste Einrichtung zur Fahrzeugsicherung gemäß dem Oberbegriff des Anspruchs 14 sowie eine Verwendung einer Sicherungseinrichtung.

Üblicherweise werden Schlösser, insbesondere Fahrradschlösser, als Sichenmgseinrichtungen zur mechanischen Sicherung (Befestigung) des zugeordneten Fahrzeugs bzw. Fahrrads an einer ortsfesten Einrichtung eingesetzt.

Der vorliegenden Erfindung liegt die Aufgabe zugrunde, ein Fahrzeug mit einer zugeordneten Sicherungseinrichtung, eine ortsfeste Einrichtung zur Sicherung eines Fahrzeugs sowie eine Verwendung einer Sicherungseinrichtung zur Sicherung eines Fahrzeugs anzugeben, wobei über die mechanische Sicherung hinaus eine zusätzliche Funktionalität ermöglicht wird.

Die obige Aufgabe wird durch ein Fahrzeug gemäß Anspruch 1, eine ortsfeste Einrichtung gemäß Anspruch 14 oder eine Verwendung gemäß Anspruch 20 gelöst. Vorteilhafte Weiterbildungen sind Gegenstand der Unteransprüche.

Ein Aspekt der vorliegenden Erfindung liegt darin, mittels der Sicherungseinrichtung zur mechanischen Verbindung zwischen dem Fahrzeug und der ortsfesten Einrichtung auch eine elektrische Verbindung zwischen dem Fahrzeug und der ortsfesten Einrichtung herzustellen. Insbesondere erfolgt gleichzeitig und/oder zwangsweise mit der Herstellung der mechanischen Verbindung - also im Sicherungszustand - auch eine Herstellung der elektrischen Verbindung. So wird bei sehr einfacher Handhabung eine zusätzliche Funktionalität ermöglicht.

Vorzugsweise wird die elektrische Verbindung zum Aufladen eines Energiespeichers des Fahrzeugs eingesetzt. Da ein mechanisches Sichern des Fahrzeugs normalerweise regelmäßig erfolgt, kann so ein regelmäßiges Aufladen des Energiespeichers des Fahrzeugs sichergestellt werden.

Die elektrische Verbindung kann alternativ oder zusätzlich auch zum Datenaustausch, insbesondere zur Identifizierung des Fahrzeugs und/oder eines Zustands des Fahrzeugs, ausgebildet sein bzw. eingesetzt werden.

Grundsätzlich kann die elektrische Verbindung zwischen dem Fahrzeug und der ortsfesten Einrichtung im Sicherungszustand für beliebige Zwecke eingesetzt werden.

Weitere Vorteile, Merkmale, Eigenschaften und Aspekte der vorliegenden Erfindung ergeben sich aus der folgenden Beschreibung einer bevorzugten Ausführungsform anhand der Zeichnung. Es zeigt:
- Fig. 1: eine schematische Seitenansicht eines vorschlagsgemäßen Fahrzeugs mit einer vorschlagsgemäßen Sicherungseinrichtung;
- Fig. 2: eine schematische Draufsicht des Fahrzeugs mit einer zugeordneten, vorschlagsgemäßen ortsfesten Einrichtung im Sicherungszustand; und
- Fig. 3: eine schematische Ansicht eines Teils der Sicherungseinrichtung.

In den Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

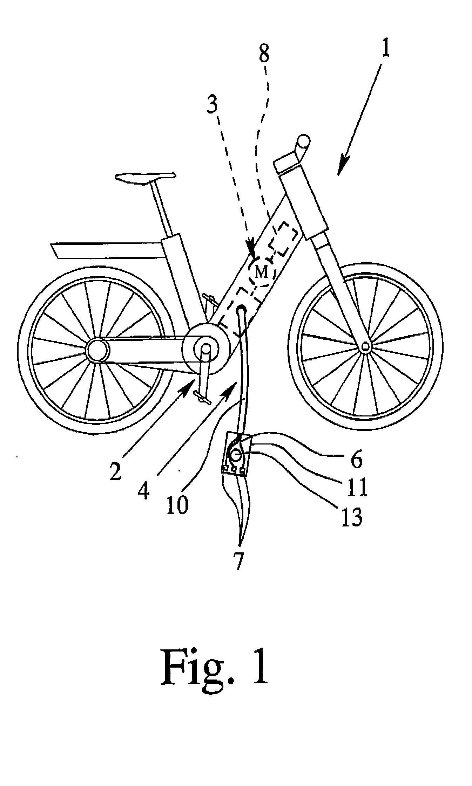

Fig. 1 zeigt in einer schematischen Darstellung ein vorschlagsgemäßes Fahrzeug 1 mit einem Muskel- bzw. Pedalantrieb 2, insbesondere einem Kurbel- bzw. Tretantrieb, und/oder einem elektrischen Antrieb 3. Vorzugsweise handelt es sich bei dem Fahrzeug 1 um ein Fahrrad, das gegebenenfalls mit einem Hilfsantrieb, insbesondere einem elektrischen Antrieb 3, ausgestattet ist. Grundsätzlich ist die vorliegende Erfindung jedoch nicht auf Fahrräder beschränkt, sondern kann auch für sonstige derartige oder ähnliche Fahrzeuge, insbesondere Dreiräder, eingesetzt werden.

Das Fahrzeug 1 weist eine zugeordnete Sicherungseinrichtung 4 auf, die beim Darstellungsbeispiel unlösbar am Fahrzeug 1 befestigt bzw. angebracht ist.

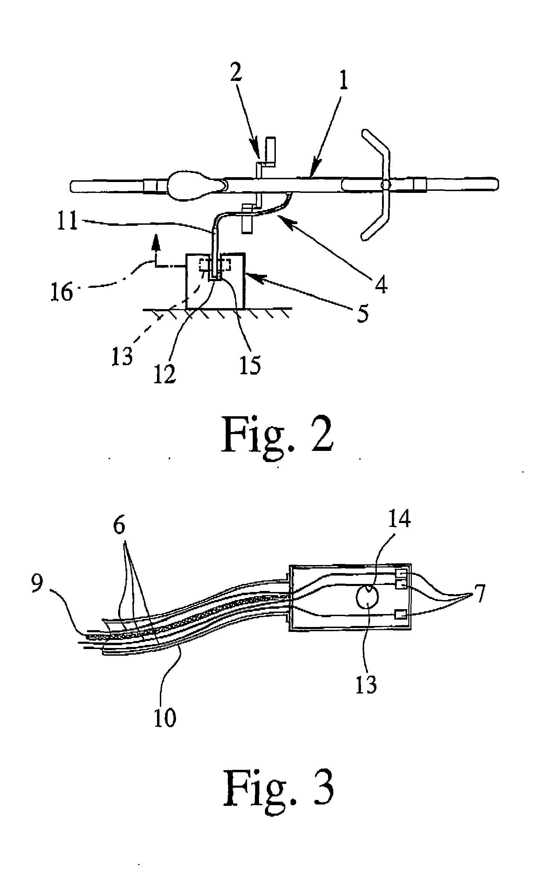

Die Sicherungseinrichtung 4 dient der mechanischen Sicherung (Befestigung) des Fahrzeugs 1 an einer ortsfesten Einrichtung 5 vorzugsweise gegen Diebstahl in einem Sicherungszustand, der in Fig. 2 dargestellt ist. Insbesondere weist die Sicherungseinrichtung 4 - gegebenenfalls zusammen mit der ortsfesten Einrichtung 5 - die Funktionalität eines Schlosses auf.

Die Sicherungseinrichtung 4 ist derartig ausgebildet, daß zusätzlich zu der mechanischen Verbindung des Fahrzeugs 1 mit der ortsfesten Einrichtung 5 insbesondere zwangsweise und/oder gleichzeitig auch eine elektrische Verbindung zwischen dem Fahrzeug 1 und der ortsfesten Einrichtung 5 im Sicherungszustand hergestellt wird,

Beim Darstellungsbeispiel weist die Sicherungseinrichtung 4 mindestens ein elektrisches Kabel 6 und/oder einen elektrischen Kontakt 7 - wie insbesondere in Fig. 1 und 3 angedeutet - auf, um eine elektrische Verbindung zwischen dem Fahrzeug 1 und der ortsfesten Einrichtung 5 im Sicherungszustand herzustellen bzw. zu ermöglichen.

Die elektrische Verbindung im Sicherungszustand kann grundsätzlich für jeden beliebigen Zweck eingesetzt werden.

Insbesondere ist die elektrische Verbindung zum Datenaustausch, besonders bevorzugt zur Identifizierung des Fahrzeugs 1 und/oder eines Zustands des Fahrzeugs 1, wie eines Ladezustands eines Energiespeichers 8 (Akkumulators) des Fahrzeugs 1, ausgebildet.

Besonders bevorzugt ist die elektrische Verbindung zum Aufladen des Energiespeichers 8 des Fahrzeugs 1 ausgebildet. Hierzu ist die ortsfeste Einrichtung 5 insbesondere als Ladegerät ausgebildet.

Beim Darstellungsbeispiel ist der elektrische Antrieb 3, insbesondere ein Elektromotor, mit dem Energiespeicher 8 vorzugsweise in das Fahrzeug 1 bzw. dessen Rahmen integriert. Jedoch sind auch andere konstruktive Lösungen möglich.

Beim Darstellungsbeispiel weist die Sicherungseinrichtung 4 ein vorzugsweise flexibles Sicherungselement 9, insbesondere eine Kette oder ein Seil, auf, das eine sehr belastbare und damit sichere mechanische Verbindung des Fahrzeugs 1 mit der ortsfesten Einrichtung 5 im Sicherungszustand ermöglicht.

Das Sicherungselement 9 bildet vorzugsweise zusammen mit dem Kabel 6, insbesondere einem mehradrigen Kabel 6, und/oder mehreren Kabeln 6 eine Baueinheit. Vorzugsweise sind hierzu das Sicherungselement 9 und das bzw. die Kabel 6 von einer gemeinsamen Ummantelung oder Hülle 10, vorzugsweise einem elektrisch isolierenden Schlauch oder Überzug, besonders bevorzugt aus Kunststoff, umgeben bzw. ummantelt, wie in Fig, 3 angedeutet. Jedoch sind hier auch andere konstruktive Lösungen möglich.

Beim Darstellungsbeispiel bildet das Sicherungselement 9 mit dem Kabel 6 bzw, den Kabeln 6 einen flexiblen Teil der Sicherungseinrichtung 4. Insofern ist hier die Sicherungseinrichtung 4 flexibel ausgebildet.

Die Sicherungseinrichtung 4 weist ein vorzugsweise starres Verbindungselement 11 auf, das beim Darstellungsbeispiel vorzugsweise flach und/oder plattenartig ausgebildet ist. Das Verbindungselement 11 kann beispielsweise aber auch zapfenartig, steckerartig oder buchsenartig ausgebildet sein.

Beim Darstellungsbeispiel schließt sich das Verbindungselement 11 an den flexiblen Teil an, ist insbesondere fest und unlösbar mit diesem bzw. dem Sicherungselement 9 verbunden.

Das Verbindungselement 11 ist vorzugsweise mit dem mindestens einen elektrischen Kontakt 7 versehen, der über das mindestens eine Kabel 6 elektrisch - beim Darstellungsbeispiel an das Fahrzeug 1 - angeschlossen ist.

Das Verbindungselement 11 bildet beim Darstellungsbeispiel vorzugsweise ein Bauteil der Sicherungseinrichtung 4 oder die Sicherungseinrichtung 4 selbst, das sowohl die mechanische Verbindung als auch die elektrische Verbindung im Sicherungszustand herstellt.

Die Sicherungseinrichtung 4 bzw. dessen Verbindungselement 11 ist beim Darstellungsbeispiel mit der ortsfesten Einrichtung 5, insbesondere einer Verbindungseinrichtung 12 der ortsfesten Einrichtung 5, im Sicherungszustand verbindbar, wie in Fig. 3 angedeutet. Die Verbindungseinrichtung 12 ist insbesondere als Ausnehmung oder Vertiefung und/oder schlitzartig und/oder vorzugsweise zur zumindest teilweisen Aufnahme des Verbindungselements 11 ausgebildet.

Im Sicherungszustand ist das Fahrzeug 1 insbesondere gegen Diebstahl gesichert. Beim Darstellungsbeispiel ist hierzu die Sicherungseinrichtung 4 bzw. deren Verbindungselement 11 im Sicherungszustand mechanisch fest von der ortsfesten Einrichtung 5 bzw. Verbindungseinrichtung 12 gehalten. Insbesondere erfolgt eine formschlüssige mechanische Verbindung im Sicherungszustand. Hierzu greift ein in Fig. 2 schematisch angedeuteter Riegel 13 oder dergleichen am Verbindungselement 11 an oder durchgreift dieses, insbesondere ein Loch 14 in dem Verbindungselement 11. Im Sicherungszustand ist der mindestens ein Kontakt 7 - hier alle Kontakte 7 - vorzugsweise über eine Anschlußeinrichtung 15 elektrisch kontaktiert bzw. mit der ortsfesten Einrichtung 5 elektrisch verbunden.

Beim Lösen der mechanischen Verbindung (nach Entriegeln des Riegels 13) bzw. Lösen oder Rausziehen des Verbindungselements 11 von bzw. aus der Verbindungseinrichtung 12 wird vorzugsweise gleichzeitig die elektrische Verbindung unterbrochen. Entsprechend ergibt sich eine sehr einfache Handhabung.

Die Sicherungseinrichtung 4 bzw. das Verbindungselement 11 wird dann vorzugsweise an einer nicht dargestellten Halterung oder dergleichen am Fahrzeug 1 befestigt, um ein unerwünschtes Herunterhängen, Herumbaumeln oder dergleichen zu vermeiden.

Die ortsfeste Einrichtung 5 ist vorzugsweise derart ausgebildet, daß gleichzeitig mehrere Fahrzeuge 1 anschließbar bzw. sicherbar sind. Die ortsfeste Einrichtung 5 weist dann insbesondere mehrere Verbindungseinrichtungen 12 (nicht dargestellt) auf.

Die Sicherungseinrichtung 4 kann grundsätzlich auch zumindest im wesentlichen starr ausgebildet sein, insbesondere also keinen flexiblen Teil wie beim Darstellungsbeispiel aufweisen.

Des weiteren sind verschiedene konstruktive Lösungen möglich.

Insbesondere kann die Sicherungseinrichtung 4 auch oder zum wesentlichen Teil an der ortsfesten Einrichtung 5 angebracht oder gebildet sein. In diesem Fall kann es beispielsweise genügen, das Fahrzeug 1 mit einer entsprechenden Verbindungseinrichtung 12 zur Verbindung mit der Sicherungseinrichtung 4 zu versehen. In diesem Fall ist die Verbindungseinrichtung 12 am Fahrzeug 1 vorzugsweise als Vorsprung oder dergleichen ausgebildet.

Im Falle der starren Ausbildung der Sicherungseinrichtung 4 und/oder der Herstellung einer starren mechanischen Verbindung zwischen dem Fahrzeug 1 und der ortsfesten Einrichtung 5 wird das Fahrzeug 1 im Sicherungszustand auch definiert gehalten, so daß dann ein separater Ständer zum Halten bzw. Abstellen des Fahrzeugs 1 im Sicherungszustand nicht erforderlich ist.

Die ortsfeste Einrichtung 5 ist vorzugsweise fernsteuerbar und/oder mit einer Datenschnittstelle 16, insbesondere zum drahtlosen Datenaustausch, versehen. Dies gestattet es beispielsweise drahtlos festzustellen, ob ein Fahrzeug 1 und gegebenenfalls welches Fahrzeug 1 an der ortsfesten Einrichtung 5 angeschlossen ist und gegebenenfalls in welchem Zustand sich das Fahrzeug 1 befindet. Insbesondere kann beispielsweise als Zustand der Ladezustand des Energiespeichers 8, der Kilometerstand und/oder ein sonstiger Wartungszustand des Fahrzeugs 1 abgefragt werden.

Wie bereits erläutert, ist die Sicherungseinrichtung 4 im Sicherungszustand gegen ein Lösen der mechanischen Verbindung zwischen dem Fahrzeug 1 und der ortsfesten Einrichtung 5 vorzugsweise sperrbar. Die Sperrung kann beispielsweise mittels eines Schlüssels aufgehoben werden. Vorzugsweise erfolgt jedoch eine elektrische oder elektromagnetische Entsperrung bzw. Entriegelung. Besonders bevorzugt erfolgt das Entsperren bzw. Entriegeln und damit das Freigeben des Fahrzeugs 1 für die Benutzung, nachdem ein Benutzer sich identifiziert hat, eine Zahlung geleistet, sich angemeldet hat oder dergleichen. Alternativ oder zusätzlich kann dieses Freigeben auch über eine Zentrale oder mehrere Zentralen erfolgen. Das Entsperren bzw. Entriegeln erfolgt insbesondere durch entsprechende Fernsteuerungen der ortsfesten Einrichtung 5. Zusätzlich und alternativ sind hier jedoch auch andere Lösungen möglich. Beispielsweise kann es auch möglich sein, daß ein Benutzer mittels einer Kreditkarte oder dergleichen sich ausweisen und/oder eine Zahlung bewirken kann, so daß dann die ortsfeste Einrichtung 5 das entsprechende Fahrzeug 1 freigibt, insbesondere also die Sicherungseinrichtung 4 entsperrt bzw, entriegelt,

Die vorschlagsgemäße Lösung ist insbesondere für größere Fahrzeugflotten geeignet, um die einzelnen Fahrzeuge 1 besonders gut überwachen, verwalten und/oder warten zu können und/oder um ein regelmäßiges bzw. definiertes Aufladen zu ermöglichen. Jedoch kann die vorschlagsgemäße Lösung kann für sonstige Zwecke eingesetzt werden.

Die vorschlagsgemäße Lösung ist insbesondere für Verleihsysteme für Fahrräder ohne sonstige Fahrzeuge 1 geeignet.

Das Fahrzeug 1 ist bedarfsweise zusätzlich mit einem nicht dargestellten zusätzlichen Schloß zum temporären Abschließen bzw. Sichern des Fahrzeugs 1 gegen Diebstahl versehen. Hierbei kann es sich insbesondere um ein übliches Fahrradschloß und/oder jede sonstige geeignete Sicherungseinrichtung handeln.

## Patentansprüche

1. Fahrzeug (1), insbesondere Fahrrad oder Dreirad, mit einem Muskel- bzw. Pedalantrieb (2) und/oder einem elektrischen Antrieb (3) und mit einer zugeordneten Sicherungseinrichtung (4) zur mechanischen Sicherung des Fahrzeugs (1) an einer ortsfesten Einrichtung (5) in einem Sicherungszustand,
**dadurch gekennzeichnet,**
**daß** die Sicherungseinrichtung (4) mindestens ein elektrisches Kabel (6) und/oder einen elektrischen Kontakt (7) aufweist, um eine elektrische Verbindung zwischen dem Fahrzeug (1) und der ortsfesten Einrichtung (5) im Sicherungszustand herzustellen.

2. Fahrzeug nach Anspruch 1, **dadurch gekennzeichnet, daß** die elektrische Verbindung zum Datenaustausch, insbesondere zur Identifizierung des Fahrzeugs (1) und/oder eines Zustands des Fahrzeugs (1), ausgebildet ist,

3. Fahrzeug nach Anspruch 1 oder 2, **dadurch gekennzeichnet, daß** das Fahrzeug (1) einen Energiespeicher (8) aufweist, der über die elektrische Verbindung im Sicherungszustand aufladbar ist, insbesondere wobei die ortsfeste Einrichtung (5) als Ladegerät ausgebildet ist.

4. Fahrzeug nach einem der voranstehenden Ansprüche, **dadurch gekennzeichnet, daß** die Sicherungseinrichtung (4) derart ausgebildet, daß im Sicherungszustand zwangsweise die elektrische Verbindung zwischen dem Fahrzeug (1) und der ortsfesten Einrichtung (5) hergestellt wird.

5. Fahrzeug nach einem der voranstehenden Ansprüche, **dadurch gekennzeichnet, daß** die Sicherungseinrichtung (4) im Sicherungszustand eine flexible oder starre mechanische Verbindung zwischen dem Fahrzeug (1) und der ortsfesten Einrichtung (5) bildet.

6. Fahrzeug nach einem der voranstehenden Ansprüche, **dadurch gekennzeichnet, daß** die Sicherungseinrichtung (4) ein Sicherungselement (9), wie ein Seil oder eine Kette, zur mechanischen Verbindung des Fahrzeugs (1) mit der ortsfesten Einrichtung (5) im Sicherungszustand aufweist.

7. Fahrzeug nach Anspruch 6, **dadurch gekennzeichnet, daß** das Sicherungselement (9) und das Kabel (6) oder mehrere Kabel (6) eine Baueinheit bilden und/oder eine gemeinsame, vorzugsweise elastische Hülle (10) aufweisen.

8. Fahrzeug nach einem der voranstehenden Ansprüche, **dadurch** gckennzeichnet, daß die Sicherungseinrichtung (4) ein Verbindungselement (11), das unlösbar mit dem Fahrzeug (1) oder der ortsfesten Einrichtung (5) verbunden ist, und eine Verbindungseinrichtung (12) für das Verbindungselement (11), die umgekehrt mit der ortsfesten Einrichtung (5) oder dem Fahrzeug (1) unlösbar verbunden ist, aufweist wobei das Verbindungselement (11) zur Herstellung der mechanischen und elektrischen Verbindung zwischen dem Fahrzeug (1) und der ortsfesten Einrichtung (5) im Sicherungszustand mit der Verbindungseinrichtung (12) verbindbar ist.

9. Fahrzeug nach Anspruch 8, **dadurch gekennzeichnet, daß** das Verbindungselement (11) plattenförmig, zapfenartig, steckerartig oder buchsenartig ausgebildet ist und/oder den mindestens einen elektrischen Kontakt (7) aufweist.

10. Fahrzeug nach Anspruch 8 oder 9, **dadurch gekennzeichnet, daß** das Verbindungselement (11) und die Verbindungseinrichtung (12) im Sicherungszustand formschlüssig verbunden sind, insbesondere ein Riegel (13) in das Verbindungselement (11) eingreift oder dieses durchgreift.

11. Fahrzeug nach einem der voranstehenden Ansprüche, **dadurch gekennzeichnet, daß** die Sicherungseinrichtung (4) und/oder die ortsfeste Einrichtung (5) derart ausgebildet ist bzw. sind, daß der Sicherungszustand insbesondere ausschließlich durch ein elektrisches Freigabesignal aufhebbar ist.

12. Fahrzeug nach einem der voranstehenden Ansprüche, **dadurch gekennzeichnet, daß** die Sicherungseinrichtung (4) unlösbar am Fahrzeug (1) angebracht ist.

13. Fahrzeug nach einem der Ansprüche 1 bis 11, **dadurch gekennzeichnet, daß** die Sicherungseinrichtung (4) unlösbar an der ortsfesten Einrichtung (5) angebracht bzw. befestigt ist.

14. Ortsfeste Einrichtung (5) zur lösbaren mechanischen Sicherung eines Fahrzeugs (1) mit einem Pedalantrieb (2) und/oder einem elektrischen Antrieb (3) in einem Sicherungszustand,
**dadurch gekennzeichnet,**
**daß** die ortsfeste Einrichtung (5) eine elektrische Anschlußeinrichtung (15) aufweist, um eine elektrische Verbindung zwischen der ortsfesten Einrichtung (5) und dem Fahrzeug (1) im Sicherungszustand herzustellen.

15. Ortsfeste Einrichtung (5) nach Anspruch 14, **dadurch gekennzeichnet, daß** die ortsfeste Einrichtung (5) als Ladegerät für einen Energiespeicher (8) des Fahrzeugs (1) ausgebildet ist.

16. Ortsfeste Einrichtung nach Anspruch 14 oder 15, **dadurch gekennzeichnet, daß** die ortsfeste Einrichtung (5) derart ausgebildet ist, daß im Sicherungszustand zwangsweise die elektrische Verbindung zwischen dem Fahrzeug (1) und der ortsfesten Einrichtung (5) hergestellt wird.

17. Ortsfeste Einrichtung nach einem der Ansprüche 14 bis 16, **dadurch gekennzeichnet, daß** die ortsfeste Einrichtung (5) zum gleichzeitigen mechanischen Absichern und elektrischen Anschließen mehrerer Fahrzeuge (1) ausgebildet ist.

18. Ortsfeste Einrichtung nach einem der Ansprüche 14 bis 17, **dadurch gekennzeichnet, daß** die ortsfeste Einrichtung (5) einen Fahrradständer bildet.

19. Ortsfeste Einrichtung nach einem der Ansprüche 14 bis 18, **dadurch gekennzeichnet, daß** die ortsfeste Einrichtung (5) insbesondere drahtlos fernsteuerbar ist und/oder eine Schnittstelle (16), insbesondere zum drahtlosen Datenaustausch, aufweist.

20. Verwendung einer Sicherungseinrichtung (4) zur mechanischen Sicherung eines Fahrzeugs (1) mit einem Pedalantrieb (2) und/oder einem elektrischen Antrieb (3) an einer ortsfesten Einrichtung (5), wobei die Sicherungseinrichtung (4) gleichzeitig mit Herstellung der mechanischen Verbindung zwischen dem Fahrzeug (1) und der ortsfesten Einrichtung (5) im Sicherungszustand auch eine elektrische Verbindung zwischen dem Fahrzeug (1) und der ortsfesten Einrichtung (5) herstellt.
